# EUROPÄISCHE PATENTSCHRIFT

(11) **EP 0 610 841 B1**
(45) Veröffentlichungstag und Bekanntmachung des Hinweises auf die Patenterteilung: **02.01.1997**
(21) Anmeldenummer: 94101792.3
(22) Anmeldetag: 07.02.1994
(51) Int. Cl.: H02G 1/12

(54) **Kabelmantelschneider für Schnitte längs der Mantellinie und der Umfangslinie**
Cable sheath cutter for longitudinal and circumferentional cuts
Découpeur de gaines de câbles pour coupes le long de la génératrice et de la périphérie

(30) Priorität: 08.02.1993 IT BZ930006
(43) Veröffentlichungstag der Anmeldung: 17.08.1994
(73) Patentinhaber: INTERCABLE SRL, I-39031 Brunico (Bolzano) (IT)
(72) Erfinder: Mutschlechner, Klaus, I-39031 Brunico (Bolzano) (IT)
(74) Vertreter: Fehners, Klaus Friedrich

(56) Entgegenhaltungen:
- DE-A- 2 306 031
- DE-C- 3 710 754

## Beschreibung

Die Erfindung bezieht sich auf einen Kabelmantelschneider mit einem Messerhalter und einem mit seiner Schwenkachse daran in der Schnittebene, in welcher sowohl die Schneide des Messers als auch die Schnittrichtungen liegen, schwenkbar gelagerten Antriebshebel, der eine bogenförmige Verzahnung aufweist.

Ein solcher handbetätigter Kabelmantelschneider für die Ausführung von Schnitten längs der Mantellinie von Ummantelungen elektrischer Kabel ist aus der DE-C-3 710 754 bekannt. Der darin beschriebene Kabelmantelschneider besteht im wesentlichen aus einem Messerhalter, in welchem ein mit einer Verzahnung versehener Antriebshebel schwenkbar gelagert ist.

Das Messer, welches am Messerhalter gegebenenfalls einstellbar oder/und rückziehbar befestigt ist, weist an der Schneidenspitze eine Abflachung auf, welche quer zur Schneide verläuft. Mittels dieser Abflachung wird beim Ansetzen des Werkzeuges durch die Kabelummantelung eingestochen, wodurch diese Abflachung während der Ausführung des Schnittes zwischen Kabelseele und Ummantelung liegt und dabei während des Vorrückens der Schneide, durch Betätigung des Handhebels nach Art eines Dosenöffners, als Führung wirkt. Dieses bekannte Schneidwerkzeug verfügt überdies über eine Einrichtung zur Verstellung der Lagerachse des Antriebshebels in Bezug auf die Auflagefläche des Messerhalters. Andere bekannte Kabelmantelschneider verfügen über Einstellvorrichtungen für die Anpassung der Eindringtiefe des Messers sowie für die leichtere Bestimmung der Schnittlänge. Auf den Messerhalter aufsteckbare, austauschbare Teile ermöglichen überdies eine Anpassung der Messerlänge an die Dicke der Kabelummantelung.

Alle diese bekannten Werkzeuge sind jedoch für die Ausführung von Schnitten längs der Umfangslinie der Kabelummantelung, insbesondere bei kleinen Durchmessern, ungeeignet und ermöglichen ausschließlich Schnitte längs der Mantellinie, wobei eine Anpassung des Messervorsprungs an die Dicke der Ummantelung vorgesehen ist.

Die Erfindung stellt sich nun die Aufgabe, ein eingangs beschriebenes Werkzeug zu schaffen, welches außer der Ausführung von Schnitten längs der Mantellinie von Kabelummantelungen auch solche längs der Umfangslinie, und zwar ohne den Einsatz weiterer Hilfsmittel, ermöglicht.

Zur Lösung dieser Aufgabe schlägt die Erfindung vor, daß bei einem Kabelmantelschneider der eingangs genannten Art der Antriebshebel mit seiner Schwenkachse in einem Abstand von dem Messerhalter angeordnet ist und daß die Schwenkachse des Antriebshebels über mindestens eine in der Schnittebene oder parallel dazu schwenkbaren Lasche an einem am Messerhalter vorgesehenen Zapfen schwenkbar angelenkt ist.
Diese erfindungsgemäße Ausbildung des Kabelmantelschneiders gewährleistet eine große Beweglichkeit des Antriebshebels gegenüber dem Messerhalter in der jeweiligen Schnittebene und ein solcher Kabelmantelschneider kann universell für Schnitte sowohl längs der Mantellinie als auch längs der Umfangslinie von Kabeln eingesetzt werden.

Vorteilhaft ist die Schwenkachse des Antriebshebels über zwei jeweils seitlich am Messerhalter sowie am Antriebshebel angeordnete Laschen an dem Messerhalter angelenkt.
Diese Doppelanordnung von Laschen erhöht die Stabilität der Verbindung zwischen dem Antriebshebel einerseits und dem Messerhalter andererseits.

Zum Einsatz desselben Werkzeugs für zwei unterschiedliche Schnittrichtungen an Oberflächen mit unterschiedlichem Formverlauf ist eine entsprechende unterschiedliche Formgebung am Auflagebereich des Messerhalters von Vorteil. Insbesondere weist die Form der Auflageflächen für die beiden Schnittrichtungen einen einzigen gemeinsamen Punkt auf, an dem nämlich die Schneide des Messers positioniert ist und in dem sich, in einem Winkel von ca. 90°, die Auflagelinien für die Ausführung des Schnittes längs der Mantellinie mit jener für die Ausführung längs der Umfangslinie der Kabelummantelung schneiden.

Die Führung des Messerhalters während der Ausführung beider Schnittrichtungen kann entweder durch zwei zueinander rechtwinklig verlaufende Rillen gebildet sein, welche ungefähr der Außenrundung der Kabelummantelung entsprechen, oder sie kann durch vier Vorsprünge gebildet werden, welche an der aufzuschneidenden Kabelummantelung entlang bewegt werden.

Dabei kann die Position dieser Vorsprünge symmetrisch in Bezug auf die Auflagelinien verstellbar sein, um dadurch die Auflagegeometrie der Außenrundung der Kabelummantelung anzupassen.

Erfindungsgemäß ist der Auflagebereich als um eine Achse, welche durch die Schneide des Messers läuft, drehbares oder in verschiedenen Positionen aufsteckbares Teil ausgebildet, welches entweder eine einzige Rille oder zwei senkrecht zueinander verlaufende Rillen unterschiedlicher Form oder Führungsvorsprünge aufweist.

Vorteilhafterweise ist die Anlenkung der Laschen am Messerhalter nicht vollständig freiläufig, sondern erfordert eine bestimmte Kraftüberwindung, um eine Lageveränderung zu erreichen, gegebenenfalls kann diese auch ruckweise erfolgen, um zu verhindern, daß während der Betätigung des Antriebhebels eine Veränderung des Winkels zwischen Messerhalter und Verbindungslaschen stattfindet.

Ein Ausführungsbeispiel der Erfindung wird anschließend anhand der Zeichnungen näher erläutert.

Es zeigen:
Fig. 1 eine Ansicht des Kabelschneiders von hinten während der Ausführung eines Schnittes längs der Mantellinie,
Fig. 2 eine Seitenansicht des Kabelmantelschneiders während der Ausführung eines Schnittes längs der Mantellinie, wobei das Kabel teilweise im Längsschnitt dargestellt ist,
Fig. 3 eine Seitenansicht des erfindungsgemäßen Kabelmantelschneiders während der Ausführung eines Schnittes längs der Umfangslinie, wobei das Kabel im Querschnitt dargestellt ist und
Fig. 4 eine Ansicht des in Fig. 3 dargestellten Kabelmantelschneiders von unten, um den Auflagebereich des Messerhalters zu zeigen.

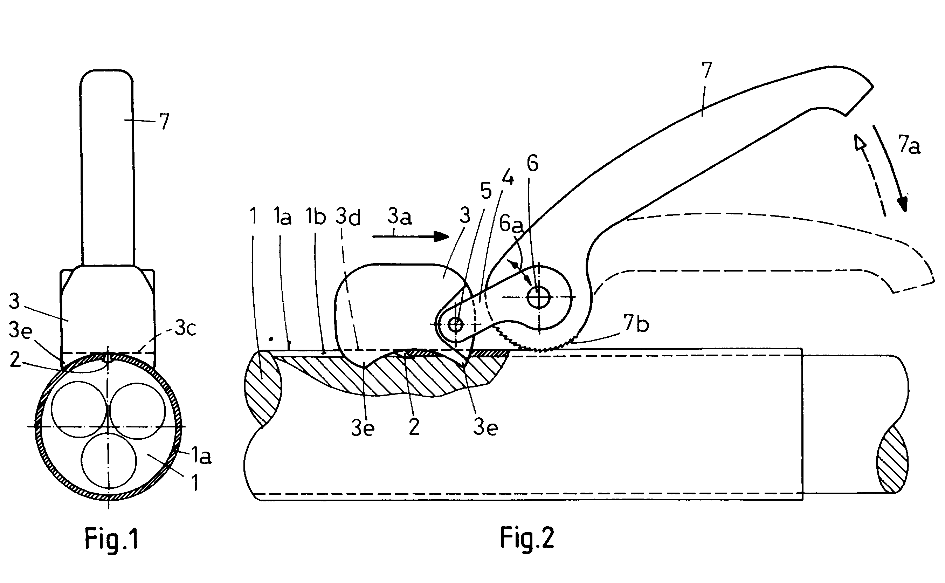

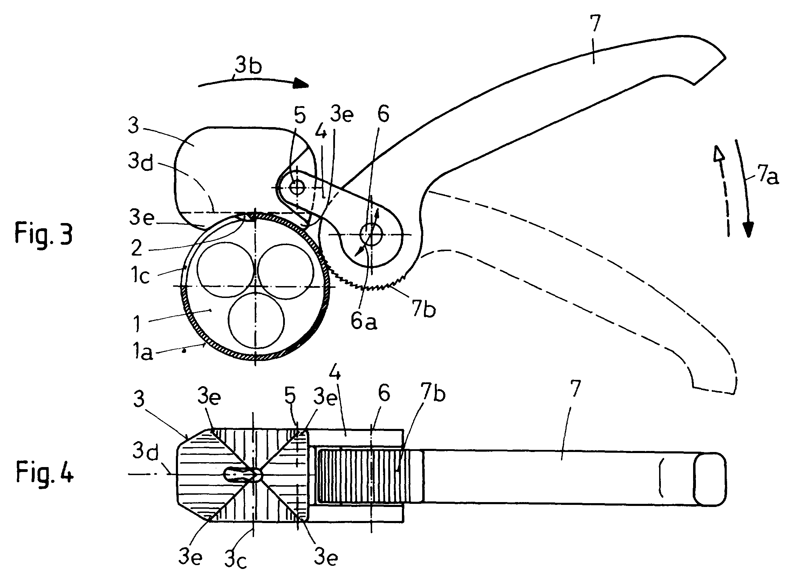

Das Kabel 1 ist von einer Ummantelung 1a umhüllt, welche in Längsrichtung 3a, siehe Fig. 2, oder/und entlang einer Umfangslinie 3b, siehe Fig. 3, zu durchtrennen ist. Das Messer 2 ist mit seiner Schneide im Bereich des Schnittpunktes zwischen den zueinander in einem Winkel von 90° verlaufenden Auflagelinien 3d bzw. 3c, welche den zwei möglichen Schnittrichtungen entsprechen, am Messerhalter 3 angeordnet.

Die Form des Auflagebereiches des Messerhalters 3 wird durch zwei zueinander rechtwinklig verlaufende Rillen bestimmt, welche vier Vorsprünge 3e bilden, die jeweils zu den Auflagelinien 3d bzw. 3c symmetrisch angeordnet sind.

Im vorderen Bereich des Messerhalters 3, bezogen auf die Schnittrichtung, sind zwei Laschen 4 schwenkbar, siehe Pfeil 6a, um den am Messerhalter 3 vorgesehenen Zapfen 5 angelenkt, an deren anderen Enden ein Antriebshebel 7 mit bogenförmiger Verzahnung 7b um eine Schwenkachse 6 angelenkt ist. Die Schwenkbewegung der Laschen 4 um den Zapfen 5 am Messerhalter 3 ist vorteilhafterweise nicht vollständig frei, sondern erfolgt durch Überwindung einer bestimmten Reibung oder ruckweise.

## Patentansprüche

1. Kabelmantelschneider mit einem Messerhalter (3) und einem mit seiner Schwenkachse (6) daran in der Schnittebene, in welcher sowohl die Schneide des Messers (2) als auch die Schnittrichtungen (3a, 3b) liegen, schwenkbar gelagerten Antriebshebel (7), der eine bogenförmige Verzahnung (7b) aufweist, dadurch gekennzeichnet, daß der Antriebshebel (7) mit seiner Schwenkachse (6) in einem Abstand von dem Messerhalter (3) angeordnet ist und daß die Schwenkachse (6) des Antriebshebels (7) über mindestens eine in der Schnittebene oder parallel dazu schwenkbaren Lasche (4) an einem am Messerhalter (3) vorgesehenen Zapfen (5) schwenkbar angelenkt ist.

2. Kabelmantelschneider nach Anspruch 1, dadurch gekennzeichnet, daß die Schwenkachse (6) des Antriebshebels (7) über zwei jeweils seitlich am Messerhalter (3) sowie am Antriebshebel (7) angeordnete Laschen (4) an dem Messerhalter (3) angelenkt ist.

3. Kabelmantelschneider nach einem der Ansprüche 1 oder 2, dadurch gekennzeichnet, daß die Ausbildung des Auflagebereiches des Messerhalters (3) auf der Ummantelung (1a) des Kabels (1) durch den Verlauf zweier Auflagelinien (3d, 3c) bestimmt ist, die den beiden Schnittrichtungen längs der Mantellinie (3a) und längs der Umfangslinie (3b) entsprechen und sich unter einem Winkel von 90° schneiden, wobei die Schneide des Messers im Bereich dieses Schnittpunktes angeordnet ist.

4. Kabelmantelschneider nach einem der Ansprüche 1 bis 4, dadurch gekennzeichnet, daß zur Führung des Messerhalter (3) auf der Ummantelung (1a) des Kabels (1) während des Schneidens, sei es entlang der Mantellinie (3a) als auch entlang der Umfangslinie (3b), der Auflagebereich des Messerhalters (3) jeweils in Richtung der Auflagelinien (3d), (3c) in Form zweier, sich rechtwinklig kreuzender Rillen bzw. in Form von vier, sich durch die Rillen ergebenden und bezüglich der Auflagelinien (3d, 3c) symmetrisch angeordneten Vorsprüngen (3e) ausgebildet ist.

5. Kabelmantelschneider nach Anspruch 4, dadurch gekennzeichnet, daß der Auflagebereich des Messerhalters (3) als getrennt vom Messerhalter (3), jedoch auf diesen aufsteckbares und um eine die Schneide des Messers (2) enthaltende Drehachse verdrehbares Element ausgebildet ist, wobei der Auflagebereich dieses Elementes eine Rille oder zwei oder mehr als zwei Rillen unterschiedlicher Form bzw. Vorsprünge aufweist.

## Claims

1. Cable sheath cutter having a blade holder (3) and, mounted by its swivel pin (6) thereon so as to swivel in the cutting plane in which both the cutting edge of the blade (2) and the cutting directions (3a, 3b) lie, a driving lever (7) which has a curved serration (7b), characterised in that the driving lever (7) is arranged with its swivel pin (6) spaced from the blade holder (3), and that the swivel pin (6) of the driving lever (7) is pivotably coupled, by way of at least one link-plate (4) pivotable in the cutting plane or parallel thereto, to a pin (5) provided on the blade holder (3).

2. Cable sheath cutter according to claim 1, characterised in that the swivel pin (6) of the driving lever (7) is coupled to the blade holder (3) by way of two link-plates (4), each of which is arranged laterally on the blade holder (3) and on the driving lever (7).

3. Cable sheath cutter according to one of claims 1 and 2, characterised in that the construction of the region of the blade holder (3) that engages the covering (la) of the cable (1) is determined by the course of two bearing lines (3d, 3c), which correspond to the two cutting directions along the surface line (3a) and along the circumferential line (3b) and which intersect at an angle of 90°, the cutting edge of the blade being arranged in the region of that intersection point.

4. Cable sheath cutter according to one of claims 1 to 4, characterised in that to guide the blade holder (3) on the covering (la) of the cable (1) during cutting, be it along the surface line (3a) or along the circumferential line (3b), the sheath-engaging region of the blade holder (3) in the direction of the bearing lines (3d), (3c) each time is in the form of two grooves intersecting at right angles or rather in the form of four projections (3e) created by the grooves and arranged symmetrically with respect to the bearing lines (3d, 3c).

5. Cable sheath cutter according to claim 4, characterised in that the sheath-engaging region of the blade holder (3) is in the form of an element that is separate from the blade holder (3) yet is attachable thereto and rotatable about an axis of rotation containing the cutting edge of the blade (2), the sheath-engaging region of that element comprising one groove or two or more than two grooves of different shape, or projections.

## Revendications

1. Découpeur de gaine de câble, avec un porte-lame (3) et un levier d'entraînement (7) pouvant pivoter dans le plan de coupe dans lequel se trouvent tant les tranchants de la lame (2), qu'également les directions de découpage (3a, 3b), levier d'entraînement présentant une denture (7b) arquée, caractérisé en ce que le levier d'entraînement (7) est disposé avec son axe de positionnement (10) avec un espacement vis-à-vis du porte-lame (3), et en ce que l'axe de pivotement (6) du levier d'entraînement (7) est articulé par l'intermédiaire d'au moins une patte (4) pouvant pivoter dans le plan de découpage ou bien parallèlement à ce plan, sur un tourillon (5) prévu sur le porte-lame (3).

2. Découpeur de gaine de câble selon la revendication 1, caractérisé en ce que l'axe de pivotement (6) du levier d'entraînement (7) est articulé au porte-lame (3) par l'intermédiaire de deux pattes (4) disposées chacune latéralement sur le porte-lame (3), ainsi que sur le levier d'entraînement (7) .

3. Découpeur de gaine de câble selon l'une des revendications 1 ou 2, caractérisé en ce que la réalisation de la plage d'application du porte-lame (3) sur la gaine (la) du câble (1) est déterminée par l'allure de deux lignes d'application (3d, 3c) qui correspondent aux deux directions de coupe, le long de la génératrice (3a) et le long de la ligne de périphérie (3b) et qui se coupent sous un angle de 90°, le tranchant de la lame étant placé dans la zone de ce point d'intersection.

4. Découpeur de gaine de câble selon l'une des revendications 1 à 4, caractérisé en ce que pour assurer le guidage du porte-lame (3) sur la gaine (la) du câble (1) pendant le découpage, que ce soit le long de la génératrice (3a) qu'également le long de la ligne de périphérie (3b), la zone d'application du porte-lame (3), respectivement dans la direction des lignes d'application (3d), (3c), est réalisée sous la forme de deux cannelures, se croisant à angle droit, respectivement sous la forme de quatre saillies (3e) produites par les cannelures et disposées symétriquement par rapport aux lignes d'application (3d, 3c).

5. Découpeur de gaine de câble selon la revendication 4, caractérisé en ce que la zone d'application du porte-lame (3) est réalisée sous forme d'élément séparé du porte-lame (3), cependant pouvant être enfilé sur celui-ci et pouvant tourner autour d'un axe de rotation contenant le tranchant de la lame (2), la zone d'application de cet élément présentant une cannelure ou bien deux cannelures ou saillies, ou plus, de forme différente.
